# EUROPEAN PATENT APPLICATION

(11) **EP 4 725 758 A1**
(43) Date of publication of application: **15.04.2026**
(21) Application number: 25206877.0
(22) Date of filing: 06.10.2025
(51) Int. Cl.: B60N 2/14, B60N 2/02

(54) **POWER SWIVEL DEVICE FOR VEHICLE SEAT**

(30) Priority: 10.10.2024 KR 20240137690
(71) Applicant: Hyundai Transys Inc., Chungcheongnam-do 31930 (KR)
(72) Inventor: KIM, Won, 18463 Hwaseong-si, Gyeonggi-do (KR)
(74) Representative: Viering, Jentschura & Partner mbB Patent- und Rechtsanwälte

(57) **Abstract**

A power swivel device for a vehicle seat includes a housing having at least one cut-out portion provided in an inner-diameter portion of the housing, a clutch gear having gear teeth provided along an inner-diameter portion of the clutch gear, the gear teeth being at least partially exposed through the cut-out portion and configured to engage with a pinion gear of a motor in a state in which the clutch gear is inserted into the housing, and a brake module inserted into the housing and including a brake drum.

## Description

### CROSS-REFERENCE TO RELATED APPLICATIONS

This application claims priority to and the benefit of Korean Patent Application No. 10-2024-0137690 filed in the Korean Intellectual Property Office on October 10, 2024, the entire contents of which are incorporated herein by reference.

### TECHNICAL FIELD

The present disclosure relates to a power swivel device for a vehicle seat, the power swivel device being configured to rotate a vehicle seat by a swivel operation.

### BACKGROUND

In general, vehicle seats may be equipped with various types of convenience devices to provide passengers with comfortable ride quality and convenience.

Examples of the convenience devices of the vehicle seats may include a seat track device configured to move a vehicle seat forward or rearward to suit an occupant's body type, a leg rest configured to support a passenger's leg, and a power swivel device for a vehicle seat configured to rotate the vehicle seat.

The seat track device may include a lower rail coupled to a floor panel in a vehicle interior, and an upper rail inserted into the lower rail and configured to move along the lower rail. The power swivel device for a vehicle seat may be connected to the upper rail.

In the power swivel device for a vehicle seat, power of a motor may be transmitted to a rotary plate through a ring gear that engages with a pinion gear of the motor. Because the rotary plate is connected to the vehicle seat, the vehicle seat may be rotated by the rotation of the rotary plate.

However, in the case of the power swivel device for a vehicle seat in the related art, there may occur problems, such as operational sensitivity deterioration, clearances, and abnormal sounds, caused by influences of accumulated tolerances between components, dimension precision, gear backlash, and the like, and the stability of the vehicle seat is inevitably degraded by clearances between gears, i.e., a pinion gear and a ring gear.

### [Document of Related Art]

### [Patent Document]

(Patent Document 1) Korean Patent Application Laid-Open No. 10-2020-0078903 (published on July 2, 2020)

### SUMMARY OF THE DISCLOSURE

The present disclosure has been made in an effort to provide a power swivel device for a vehicle seat, in which a brake release state of a brake member is implemented by a clutch gear configured to be rotated by an operation of a motor, and thus a rotational force of a brake drum is transmitted to a rotary plate connected to a vehicle seat, such that the vehicle seat may rotate.

In order to achieve the above-mentioned object, the present disclosure provides a power swivel device for a vehicle seat, the power swivel device including: a housing having at least one cut-out portion positioned at an inner-diameter portion of the housing; a clutch gear having gear teeth positioned along an inner-diameter portion of the clutch gear, at least one portion of the gear teeth being exposed through the at least one cut-out portion, the gear teeth being configured to engage with a pinion gear of a motor in a state in which the clutch gear is inserted into the housing; and a brake module inserted into the housing and including a brake drum, in which at least one stopper is positioned on the brake drum, and the at least one stopper is configured to restrict an additional rotation of the brake drum in a hard stop state in which an operation of the brake drum is stopped.

In addition, the housing may include: a first accommodation portion positioned in the housing adjacent to the inner-diameter portion of the housing and the clutch gear inserted therein; and a second accommodation portion configured to communicate with the first accommodation portion and positioned in the housing adjacent to an outer edge of the housing while defining a stepped portion together with the first accommodation portion, the second accommodation portion being defined at a height higher than a height of the first accommodation portion.

In addition, the brake module may further include a brake ring inserted into the second accommodation portion, and the brake drum may be seated on the clutch gear and positioned at a same height as a height of the brake ring.

In addition, the at least one stopper may be positioned on an inner-diameter portion of the brake drum to correspond to a position of the pinion gear, and the at least one stopper may be configured to surround at least a part of a circumference of the pinion gear.

In addition, the clutch gear may have a double injection molding structure including a gear part and a main body part configured to surround an edge portion of the gear part.

In addition, the power swivel device may further include a position switch configured to prevent an erroneous operation of the clutch gear, the position switch may be configured to determine that a position of the clutch gear is an abnormal position when the clutch gear is stopped while the position switch is in a turn-on state, or to determine that the position of the clutch gear is a normal position when the clutch gear is stopped while the position switch is in a turn-off state.

In addition, a brake member may be positioned between an inner-diameter portion of the brake ring and an outer-diameter portion of the brake drum, the brake member may be configured to be in a brake state when the brake member is positioned between pressing protrusions disposed along an edge of one surface of the clutch gear, and the brake member may be configured to switch to from the brake state a brake release state by being pushed by the pressing protrusions when the clutch gear rotates.

In addition, the brake member may include: an elastic member; and rollers disposed at two opposite sides of the elastic member to be directed toward the pressing protrusions, the rollers being elastically supported by the elastic member.

In addition, the brake drum may have support surfaces positioned on the outer-diameter portion of the brake drum, each of the rollers may be configured to be wedge between an inner-diameter portion of the brake ring and each of the support surfaces to implement the brake state, and each of the rollers may be configured to be released from being wedged to implement the brake release state when each of the rollers is pushed by each of the pressing protrusions and positioned in a support groove positioned at one end of each of the support surfaces.

In addition, a cover may be coupled to an upper surface of the housing above the clutch gear, the brake ring, and the brake drum.

In addition, the cover may be seated on an upper surface of the brake ring, pressing protrusions of the clutch gear, and a seating surface defined at an edge of the brake drum.

In addition, a clip may be disposed an outer-diameter portion of the cover, and a coupling hole defined in the clip may be coupled to a coupling protrusion disposed on an outer-diameter portion of the housing.

In addition, the housing may be seated and coupled onto a fixing frame, a rim cover may be coupled to an edge of the fixing frame, a swivel member may be inserted into an inner-diameter portion of the rim cover, and an edge portion of the swivel member may be inserted into the rim cover.

In addition, a first rail part and a second rail part may be respectively positioned above and below the edge portion of the swivel member, the first rail part may be rotatably supported by a first ball disposed under the rim cover and above the endge portion of the swivel member, and the second rail part may be rotatably supported by a second ball positioned on the fixing frame and under the edge portion of the swivel member.

The swivel member may be connected to a rotary plate, and the rotary plate may be configured to be connected to a vehicle seat.

In addition, each of the support surfaces may be an inclined surface inclining downward in a direction away from each of the pressing protrusions.

In addition, a width between the one end of each of the support surfaces and the inner-diameter portion of the brake ring may be greater than a width between another end of each of the support surfaces opposite to the one end of each of the support surfaces and the inner-diameter portion of the brake ring.

In addition, the support groove may have a circular arc shape that conforms to a shape of each of the rollers.

In addition, when viewed from a top of the brake member and the brake drum, a width between the support groove and the inner-diameter portion of the brake ring may be equal to or greater than a diameter of each of the rollers.

In addition, the at least one cut-out portion may include a first cut-out portion and a second cut-out portion positioned directly opposite to the first cut-out portion on the inner-diameter portion of the housing.

According to the present disclosure, it is possible to optimize the operation sensitivity during the swivel operation and compensate for the clearance in the rotation direction in the stopped state, thereby improving the stability of the vehicle seat.

In addition, according to the present disclosure, it is possible to enhance the manipulation sensitivity, thereby providing comfort to the passenger while simultaneously improving marketability.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a power swivel device for a vehicle seat according to an exemplary embodiment of the present disclosure.
FIG. 2 is a perspective view illustrating a state in which a clutch gear, a brake ring, a brake drum, and a cover are assembled to a housing according to the exemplary embodiment of the present disclosure.
FIG. 3 is an exploded perspective view of the power swivel device for a vehicle seat according to the exemplary embodiment of the present disclosure.
FIG. 4 is a top plan view illustrating an operation of a brake member according to the exemplary embodiment of the present disclosure.
FIG. 5 is a bottom plan view illustrating a state in which gear teeth of the clutch gear are exposed through cut-out portions of the housing according to the exemplary embodiment of the present disclosure.
FIG. 6 is a cross-sectional view taken along line A-A in FIG. 4.
FIG. 7 is a view illustrating the clutch gear manufactured as a double injection molding structure according to the exemplary embodiment of the present disclosure.
FIG. 8 is a view illustrating a position switch according to the exemplary embodiment of the present disclosure.
FIG. 9 is a perspective view illustrating a state in which a rim cover and a swivel member are assembled to a fixing frame according to the exemplary embodiment of the present disclosure.
FIG. 10 is a cross-sectional view taken along line B-B in FIG. 9.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

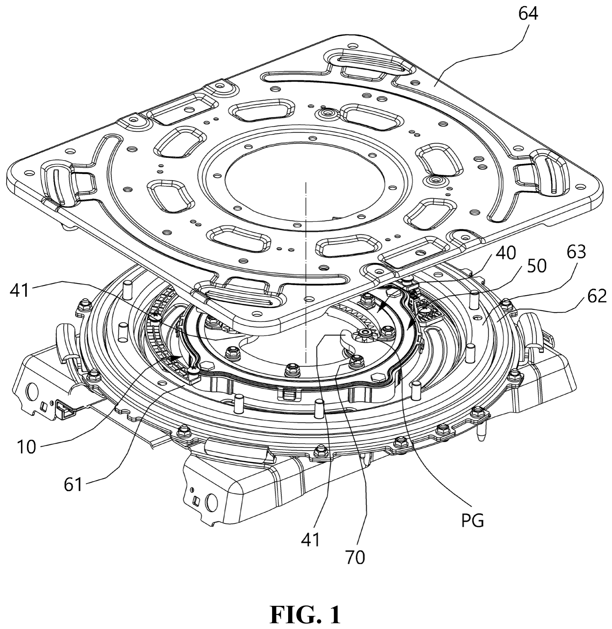

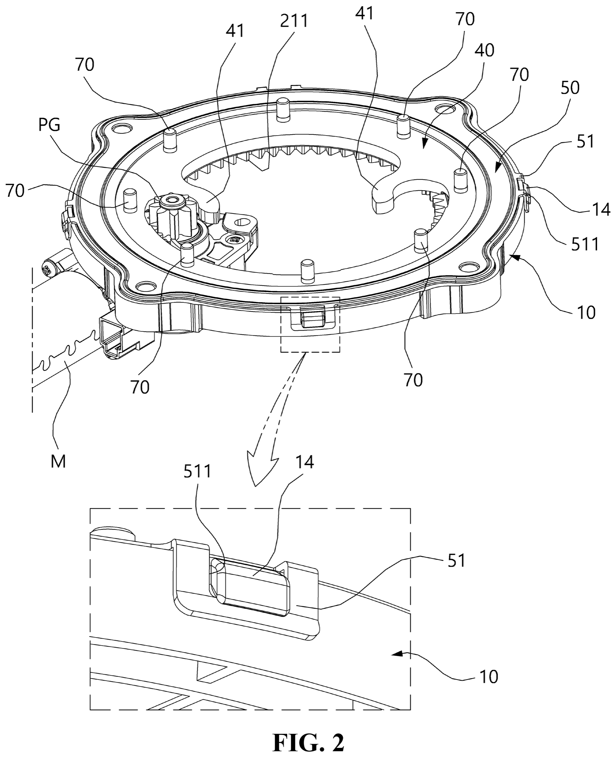

FIG. 1 is a perspective view of a power swivel device for a vehicle seat according to an exemplary embodiment of the present disclosure. FIG. 2 is a perspective view illustrating a state in which a clutch gear, a brake ring, a brake drum, and a cover are assembled to a housing according to the exemplary embodiment of the present disclosure.

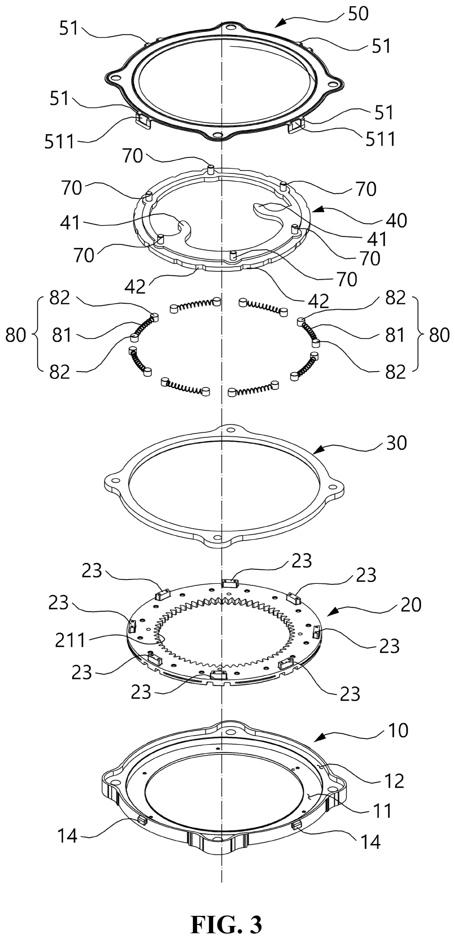

As illustrated in FIGS. 1 and 2, according to the present disclosure, power of a motor M is transmitted to a rotary plate 64 through a clutch gear 20 (see FIG. 3), and the rotary plate 64 swivels, such that a vehicle seat (not illustrated) connected to the rotary plate 64 may rotate.

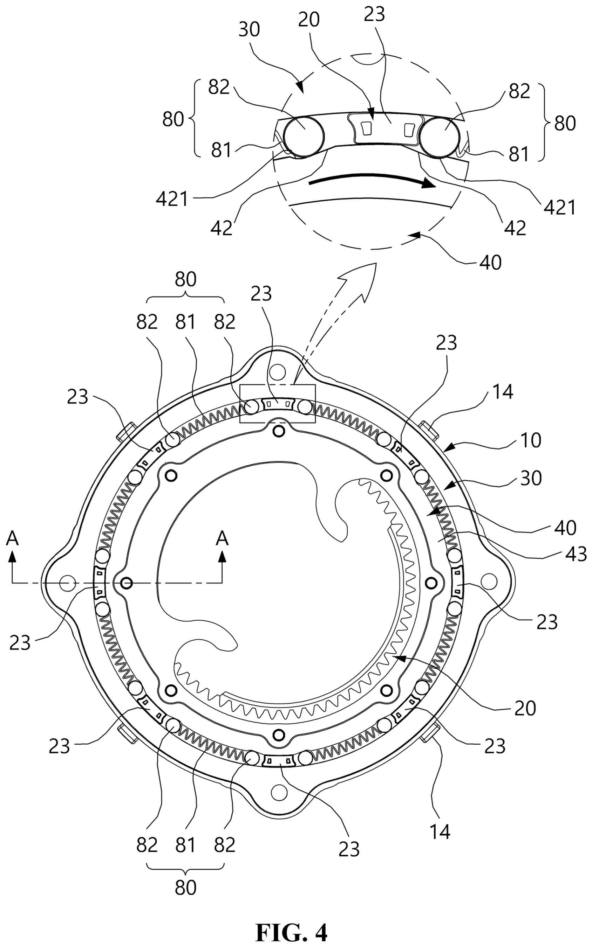

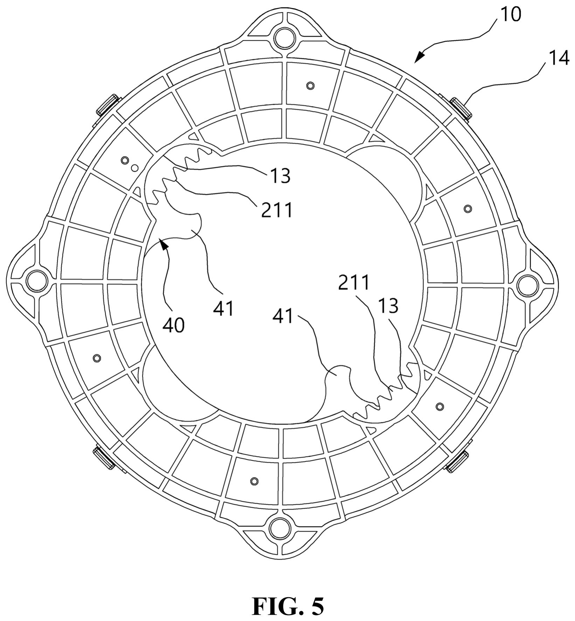

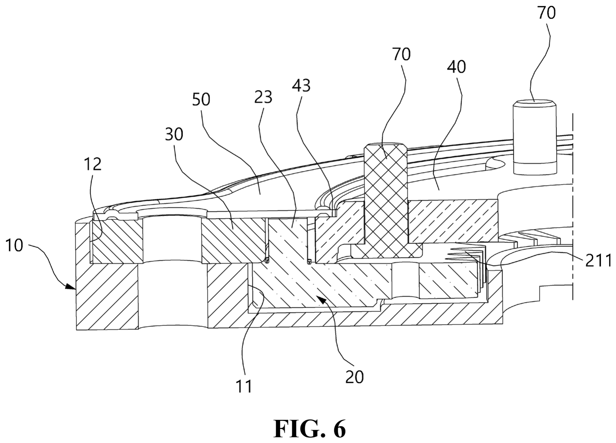

FIG. 3 is an exploded perspective view of the power swivel device for a vehicle seat according to the exemplary embodiment of the present disclosure. FIG. 4 is a top plan view illustrating an operation of a brake member according to the exemplary embodiment of the present disclosure. FIG. 5 is a bottom plan view illustrating a state in which gear teeth of the clutch gear are exposed through cut-out portions of the housing according to the exemplary embodiment of the present disclosure. FIG. 6 is a cross-sectional view taken along line A-A in FIG. 4.

As illustrated in FIGS. 3 to 6, according to the present disclosure, a cover 50 may be coupled to an upper portion of a housing 10 in a state in which the clutch gear 20, a brake ring 30, and a brake drum 40 are assembled in the housing 10.

The housing 10 may include a first accommodation portion 11, a second accommodation portion 12, cut-out portions 13, and coupling protrusions 14.

The first accommodation portion 11 may be formed in the housing 10 and formed adjacent to an inner-diameter portion of the housing 10. The first accommodation portion 11 may be configured in a shape that conforms to the clutch gear 20 so that the clutch gear 20 may be inserted into the first accommodation portion 11.

The second accommodation portion 12 may be formed in the housing 10 and formed adjacent to an edge of the housing 10. The edge may be an outer edge of the housing 10. The second accommodation portion 12 may communicate with the first accommodation portion 11. The second accommodation portion 12 may be formed to be higher than the first accommodation portion 11 in order to form a stepped portion together with the first accommodation portion 11. The second accommodation portion 12 may be configured in a shape that conforms to the brake ring 30 so that the brake ring 30 may be inserted into the second accommodation portion 12.

The brake drum 40 may be assembled by being seated on the clutch gear 20 in the state in which the clutch gear 20 is inserted and assembled into the first accommodation portion 11 of the housing 10.

Because the second accommodation portion 12 is higher in height than the first accommodation portion 11, the brake ring 30, which is inserted into the second accommodation portion 12, and the brake drum 40, which is seated on the clutch gear 20, may be equal in height.

Pressing protrusions 23 may be provided at equal intervals along an edge of an upper surface of the clutch gear 20. The brake drum 40 may be inserted into the first accommodation portion 11, and the brake ring 30 may be inserted into the second accommodation portion 12 with the pressing protrusions 23 of the clutch gear 20 interposed therebetween.

The cover 50 may be coupled to the upper portion of the housing 10 in the state in which the clutch gear 20, the brake ring 30, and the brake drum 40 are assembled in the housing 10, thereby preventing separation of the clutch gear 20, the brake ring 30, and the brake drum 40 coupled in the housing 10.

Specifically, the cover 50 coupled to the upper portion of the housing 10 may be seated on the brake ring 30, the pressing protrusions 23, and a seating surface 43 formed at an edge of the brake drum 40.

With reference to FIG. 2, clips 51 may be provided on a lateral surface of the cover 50. A coupling hole 511 may be provided in the clip 51. The coupling holes 511 of the clips 51 may be coupled to the coupling protrusions 14 provided on a lateral surface of the housing 10.

As described above, the assembling structure implemented by the clips 51 may not only make it very easy to assemble the cover 50 and the housing 10, but also solve a problem of a deterioration in quality caused by heat generated when the cover 50 and the housing 10 are assembled by an assembling method in the related art, such as welding or caulking.

With reference to FIGS. 2, 3, and 5, gear teeth 211 may be formed along an inner-diameter portion of the clutch gear 20. Only some of the gear teeth 211 of the clutch gear 20 may be exposed through the cut-out portions 13 of the housing 10.

As described above, the clutch gear 20 is mostly positioned in the housing 10, and only some of the gear teeth 211 are exposed, such that the clutch gear 20 may stably rotate in the housing 10.

The two cut-out portions 13 are formed at two opposite sides of the inner-diameter portion of the housing 10, such that the power swivel device may be used in common for a rightward or leftward swivel operating method.

The gear teeth 211 of the clutch gear 20, which are exposed through the cut-out portions 13, may engage with a pinion gear PG of the motor M.

Because the pinion gear PG of the motor M engages with the gear teeth 211 of the clutch gear 20 as described above, power of the motor M may be transmitted to the clutch gear 20 through the pinion gear PG.

With reference to FIGS. 2 to 4, stoppers 41 may be provided on portions of an inner-diameter portion of the brake drum 40 that correspond to the pinion gear PG of the motor M. The stopper 41 may be configured to surround at least a part of a circumference of the pinion gear PG of the motor M. The stoppers 41 may allow the pinion gear PG to be assembled at an accurate position within an allowable error range.

The stopper 41 may determine a final position of the vehicle seat (not illustrated) by means of a hard stop with the pinion gear PG of the motor M.

For example, two stoppers 41 may be formed at two opposite sides of the inner-diameter portion of the brake drum 40 so that the power swivel device may be used in common for the rightward or leftward swivel operating method.

An unlocked state may be implemented when the pressing protrusions 23 of the clutch gear rotate in the brake release direction toward rollers 82 and push the rollers 82 to the support grooves 421. A locked state (caught or wedged state) (e.g. when rollers 82 are wedged between the inner diameter portion of the brake ring 30 and the support surfaces 42) may be achieved again when the pressing protrusions 23 of the clutch gear 20 reversely rotate to positions at which the pressing protrusions 23 may release rollers 82 of brake members 80 to be caught or wedged between the inner diameter portion of the brake ring 30 and the support surfaces 42. Because the brake module (the brake ring, the brake drum, or the like), which is operated by the motor M, may be stopped at a position at which the operation of the motor M is completed, the rollers 82 disposed in the traveling direction (e.g. the rotating direction of the pressing protrusions 23) may be continuously maintained in an unlocked state (e.g. the state in which the rollers 82 are not wedged or not caught between the inner diameter portion of the brake ring 30 and the support surfaces 42). As a result, the brake module is in a state capable of rotating by a stroke amount (about 1 to 2 degrees) of the roller 82 in the traveling direction of the pressing protrusion 23, and the stroke amount may be recognized as a clearance, although it may be only once.

However, according to the present disclosure, because the stopper 41 of the brake drum 40 is configured to surround the pinion gear PG, the stopper 41 is caught by the pinion gear PG and cannot rotate even though the brake drum 40 is about to additionally rotate in the traveling direction in the state in which the operation of the brake drum 40 is stopped at the hard stop.

Also, when the stopper 41 is positioned on the brake drum 40, it is possible to immediately suppress the rotation of the brake drum 40 in the traveling direction of the brake drum 40 without being influenced by shapes, dimensions, and so forth of the components of the power swivel device, in comparison with a case in which the stopper 41 is provided at another position on another component other than the brake drum 40.

Furthermore, in a case in which the stopper 41 is provided at a position other than the brake drum 40, there is a very high likelihood that a deviation of an absolute position (0 degrees) may occur due to various factors. However, because the stopper 41 is provided on the inner diameter portion of the brake drum 40 according to the present disclosure, such a problem may be completely solved.

With reference to FIG. 6, coupling members 70, such as serration bolts, may be coupled to the brake drum 40. The coupling member 70 may be coupled to the brake drum 40 by a method such as press-fitting, bolting, or welding. The coupling member 70 may also be coupled to the clutch gear 70.

For example, the coupling members 70 may penetrate the brake drum 40 and be coupled to the rotary plate 64.

With reference to FIG. 4, the brake members 80 may be positioned between the pressing protrusions 23 while being positioned between an inner-diameter portion of the brake ring 30 and an outer-diameter portion of the brake drum 40.

The brake member 80 may include an elastic member 81, and the rollers 82 provided at two opposite sides of the elastic member 81. The rollers 82 may be elastically supported by the elastic member 81 so as to be directed toward the pressing protrusions 23.

The elastic member 81 is most preferably configured as a spring. However, the elastic member 81 may be made of rubber or elastomer that provides an elastic force.

Support surfaces 42 may be provided along the outer-diameter portion of the brake drum 40. The support surface 42 may be configured as an inclined surface. The support surfaces 42 may be configured to correspond to the rollers 82 of the brake members 80 so as to support the rollers 82 of the brake members 80. In a case that the rollers 82 are positioned on the support surfaces 42 by the elastic force of the elastic members 81, the rollers 82 may be caught in the form of wedges between the inner-diameter portion of the brake ring 30 and the support surfaces 42. As a result, a brake state (e.g. the locked state) may be implemented in which the vehicle seat (not illustrated) cannot rotate.

A release state may be implemented when the rollers 82 are pushed by the pressing protrusions 23 and positioned in support grooves 421 each provided at one end of each of the support surfaces 42 when the clutch gear 20 rotates. As a result, a brake release state (e.g. the unlocked state) may be implemented in which the vehicle seat (not illustrated) may rotate.

The support groove 421 may have a circular arc shape that conforms to the roller 82. A width between the inner-diameter portion of the brake ring 30 and the support surface 42 may decrease from one end of the support surface 42 toward the other end of the support surface 42 directed toward the pressing protrusion 23.

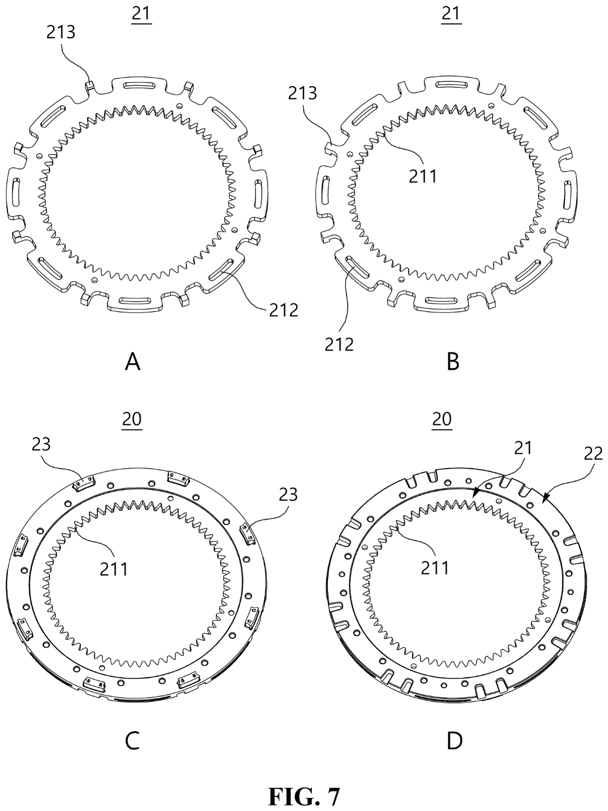

FIG. 7 is a view illustrating the clutch gear manufactured as a double injection molding structure according to the exemplary embodiment of the present disclosure.

As illustrated in FIG. 7, the clutch gear 20 may be configured as a double injection molding structure including a gear part 21 and a main body part 22.

FIG. 7A is a top plan view of the gear part, and FIG. 7B is a bottom plan view of the gear part. The gear part 21 may be made of metal such as steel. Slot holes 212 and bending portions 213 may be provided along an outer-diameter portion of the gear part 21.

The injection molding may be performed as a forming material of the main body part 22 is introduced into the slot holes 212, such that the double injection molding may be securely performed on the gear part 21 and the main body part 22.

The double injection molding may be performed on the gear part 21 and the main body part 22 in a state in which the bending portions 213 are bent to be directed toward a center of the gear part 21. The pressing protrusions 23 may be naturally formed during the process in which the injection molding is performed so that the main body part 22 surrounds the bending portions 213 of the gear part 21.

FIG. 7C is a top plan view illustrating the clutch gear formed by performing the double injection molding on the gear part and the main body part, and FIG. 7D is a bottom plan view illustrating the clutch gear formed by performing the double injection molding on the gear part and the main body part. Because the clutch gear 20 is manufactured by performing the double injection molding on the gear part 21 and the main body part 22, the clutch gear 20 may be precisely manufactured.

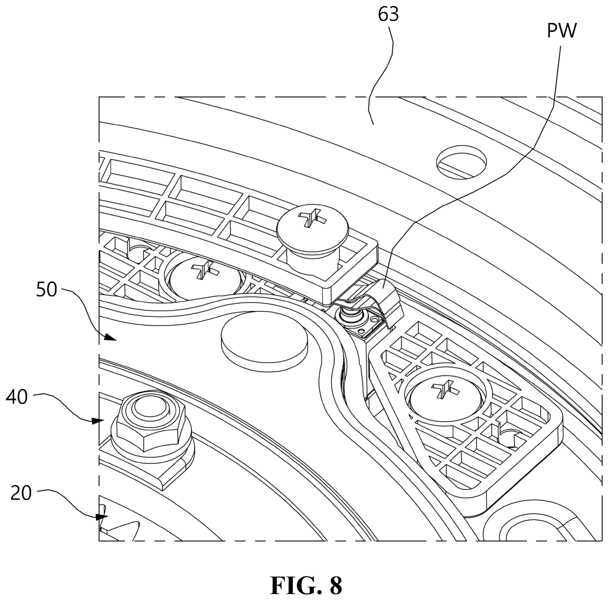

FIG. 8 is a view illustrating a position switch according to the exemplary embodiment of the present disclosure.

As illustrated in FIG. 8, a position switch PW configured to detect an error of the clutch gear 20 may be provided.

In a case in which the operation of the power swivel device is stopped by a hard stop of the clutch gear 20 (e.g. when the stopper 41 stops the pinion gear PG by a hard stop), the position switch PW may determine whether a stop position of the clutch gear 20 is a normal position (0 degrees or 180 degrees) or an abnormal position. In a case in which an abnormal load is being applied to the clutch gear 20, the clutch gear 20 may be stopped at the abnormal position.

In a case in which the clutch gear 20 is stopped when the position switch PW is in a turn-on state, the position switch PW may detect the abnormal position. In a case in which the clutch gear 20 is stopped in a section in which the position switch PW is turned off, the position switch PW may recognize that the clutch gear 20 normally reaches a target position.

In another example, the position switch PW may directly detect a preset angle of 0 degrees of the clutch gear 20, thereby preventing an erroneous operation of the clutch gear 20.

For example, any position switch, such as a microswitch or a limit switch, which may perform zero point control, may be used as the position switch PW.

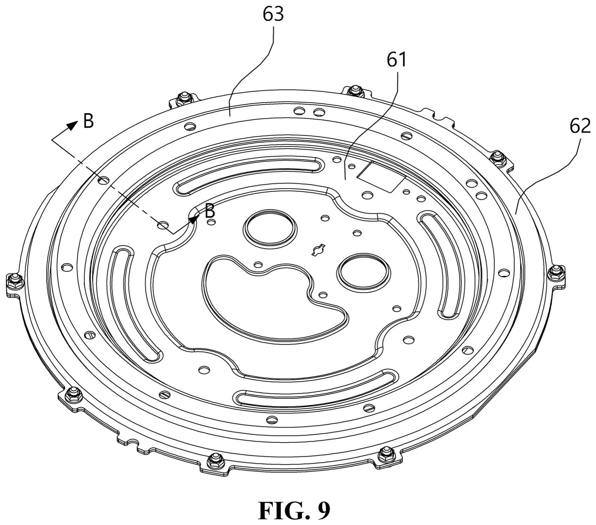

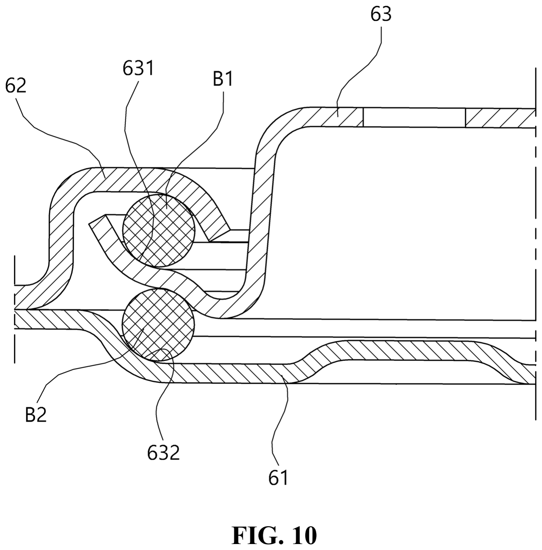

FIG. 9 is a perspective view illustrating a state in which a rim cover and a swivel member are assembled to a fixing frame according to the exemplary embodiment of the present disclosure. FIG. 10 is a cross-sectional view taken along line B-B in FIG. 9.

As illustrated in FIGS. 1, 9, and 10, the housing 10 may be seated and coupled onto a fixing frame 61. A rim cover 62 may be coupled to an edge of the fixing frame 61. A swivel member 63 may be inserted into an inner-diameter portion of the rim cover 62. An edge portion of the swivel member 63 may be assembled to be inserted into the rim cover 62.

A first rail part 631 and a second rail part 632 may be respectively provided above and below an edge of the swivel member 63. The first rail part 631 may be rotatably supported by first balls B1 provided in the rim cover 62. The second rail part 632 may be rotatably supported by second balls B2 provided in the fixing frame 61.

The swivel member 63 may be connected to the rotary plate 64. The swivel member 63 may rotate together with the rotary plate 64.

Next, a swivel operation of the present disclosure will be described.

As illustrated in FIGS. 1 and 2, because the pinion gear PG of the motor M and the gear teeth 211 of the clutch gear 20 engage with one another, the power of the motor M may be transmitted to the clutch gear 20 when the motor M operates, such that the clutch gear 20 may rotate in a brake release direction.

As illustrated in FIG. 4, when the clutch gear 20 rotates in the brake release direction, the rollers 82 of the brake members 80, which are wedged or caught between the inner-diameter portion of the brake ring 30 and the support surfaces 42, may be pushed by the pressing protrusions 23 and moved to the support grooves 421.

The wedged or caught state of the rollers 82 may be released as the rollers 82 are pushed by the pressing protrusions 23 and positioned in the support grooves 421. As a result, the brake release state may be implemented in which the vehicle seat (not illustrated) may rotate.

In the brake release state, the rotational force of the clutch gear 20 may be transmitted to the rotary plate 64 connected to the clutch gear 20 by the coupling members 70, such that the rotary plate 64 may rotate.

When the rotary plate 64 rotates, the vehicle seat (not illustrated) connected to the rotary plate 64 may rotate.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: Housing
11: First accommodation portion
12: Second accommodation portion
13: Cut-out portion
14: Coupling protrusion
20: Clutch gear
21: Gear part
211: Gear tooth
212: Slot hole
213: Bending portion
22: Main body part
23: Pressing protrusion
30: Brake ring
40: Brake drum
41: Stopper
42: Support surface
421: Support groove
43: Seating surface
50: Cover
51: Clip
511: Coupling hole
61: Fixing frame
62: Rim cover
63: Swivel member
631: First rail part
632: Second rail part
64: Rotary plate
70: Coupling member
80: Brake member
81: Elastic member
82: Roller
B1: First ball
B2: Second ball
M: Motor
PG: Pinion gear
PW: Position switch

## Claims

1. A power swivel device for a vehicle seat, the power swivel device comprising:
a housing having at least one cut-out portion positioned at an inner-diameter portion of the housing, wherein, optionally, the at least one cut-out portion includes a first cut-out portion and a second cut-out portion positioned directly opposite to the first cut-out portion on the inner-diameter portion of the housing;
a clutch gear having gear teeth positioned along an inner-diameter portion of the clutch gear, at least one portion of the gear teeth being exposed through the at least one cut-out portion, the gear teeth being configured to engage with a pinion gear of a motor in a state in which the clutch gear is inserted into the housing; and
a brake module inserted into the housing and comprising a brake drum,
wherein at least one stopper is positioned on the brake drum, and the at least one stopper is configured to restrict an additional rotation of the brake drum in a hard stop state in which an operation of the brake drum is stopped.

2. The power swivel device of claim 1,
wherein the housing comprises:
a first accommodation portion positioned in the housing adjacent to the inner-diameter portion of the housing and having the clutch gear inserted therein; and
a second accommodation portion configured to communicate with the first accommodation portion and positioned in the housing adjacent to an outer edge of the housing while defining a stepped portion together with the first accommodation portion, the second accommodation portion being defined at a height higher than a height of the first accommodation portion.

3. The power swivel device of claim 2,
wherein the brake module further comprises a brake ring inserted into the second accommodation portion, and
wherein the brake drum is seated on the clutch gear and positioned at a same height as a height of the brake ring.

4. The power swivel device of anyone of claims 1-3, wherein the at least one stopper is positioned on an inner-diameter portion of the brake drum to correspond to a position of the pinion gear, and the at least one stopper is configured to surround at least a part of a circumference of the pinion gear.

5. The power swivel device of anyone of claims 1-4, wherein the clutch gear has a double injection molding structure comprising a gear part and a main body part configured to surround an edge portion of the gear part.

6. The power swivel device of anyone of claims 1-5, further comprising:
a position switch configured to prevent an erroneous operation of the clutch gear,
wherein the position switch is configured to determine that a position of the clutch gear is an abnormal position when the clutch gear is stopped while the position switch is in a turn-on state, or determine that the position of the clutch gear is a normal position when the clutch gear is stopped while the position switch is in a turn-off state.

7. The power swivel device of claim 3, or of anyone of claims 4-6 provided that in combination with claim 3,
wherein a brake member is positioned between an inner-diameter portion of the brake ring and an outer-diameter portion of the brake drum,
wherein the brake member is configured to be in a brake state when the brake member is positioned between pressing protrusions disposed along an edge of one surface of the clutch gear, and
wherein the brake member is configured to switch from the brake state to a brake release state by being pushed by the pressing protrusions when the clutch gear rotates.

8. The power swivel device of claim 7,
wherein the brake member comprises:
an elastic member; and
rollers disposed at two opposite sides of the elastic member to be directed toward the pressing protrusions, the rollers being elastically supported by the elastic member.

9. The power swivel device of claim 8,
wherein the brake drum has support surfaces positioned on the outer-diameter portion of the brake drum, wherein, optionally, each of the support surfaces is an inclined surface inclining downward in a direction away from each of the pressing protrusions, wherein, further optionally, a width between the one end of each of the support surfaces and the inner-diameter portion of the brake ring is greater than a width between another end of each of the support surfaces opposite to the one end of each of the support surfaces and the inner-diameter portion of the brake ring,
wherein each of the rollers is configured to be wedged between an inner-diameter portion of the brake ring and each of the support surfaces to implement the brake state, and
wherein each of the rollers is configured to be released from being wedged to implement the brake release state when each of the rollers is pushed by each of the pressing protrusions and positioned in a support groove positioned at one end of each of the support surfaces, wherein, optionally, the support groove has a circular arc shape that conforms to a shape of each of the rollers, and
wherein, optionally, when viewed from a top of the brake member and the brake drum, a width between the support groove and the inner-diameter portion of the brake ring is equal to or greater than a diameter of each of the rollers.

10. The power swivel device of claim 3, or of anyone of claims 4-9 provided that in combination with claim 3, wherein a cover is coupled to an upper surface of the housing above the clutch gear, the brake ring, and the brake drum.

11. The power swivel device of claim 10, wherein the cover is seated on an upper surface of the brake ring, pressing protrusions of the clutch gear, and a seating surface defined at an edge of the brake drum.

12. The power swivel device of claim 10 or 11, wherein a clip is disposed on an outer-diameter portion of the cover, and a coupling hole defined in the clip is coupled to a coupling protrusion disposed on an outer-diameter portion of the housing.

13. The power swivel device of anyone of claims 10-12, wherein the housing is seated and coupled onto a fixing frame, a rim cover is coupled to an edge of the fixing frame, a swivel member is inserted into an inner-diameter portion of the rim cover, and an edge portion of the swivel member is inserted into the rim cover.

14. The power swivel device of claim 13, wherein a first rail part and a second rail part are respectively positioned above and below the edge portion of the swivel member, the first rail part is rotatably supported by a first ball disposed under the rim cover and above the edge portion of the swivel member, and the second rail part is rotatably supported by a second ball positioned on the fixing frame and under the edge portion of the swivel member.

15. The power swivel device of claim 13 or 14, wherein the swivel member is connected to a rotary plate, and the rotary plate is configured to be connected to a vehicle seat.
